# FASCICULE DE BREVET EUROPEEN

(11) **EP 0 603 045 B1**
(45) Date de publication et mention de la délivrance du brevet: **28.08.1996**
(21) Numéro de dépôt: 93402999.2
(22) Date de dépôt: 13.12.1993
(51) Int. Cl.: H04N 7/00

(54) **Procédé de constitution de multiplex numérique et dispositif de mise en oeuvre dudit procédé**
Verfahren zur Bildung eines digitalen Multiplex und Einrichtung zur Durchführung dieses Verfahrens
Method for the constitution of a digital multiplex and device for implementing said method

(30) Priorité: 15.12.1992 FR 9215103
(43) Date de publication de la demande: 22.06.1994
(73) Titulaire: MATRA COMMUNICATION, F-29100 Quimper (FR)
(72) Inventeur: Mary, Jean, F-91400 Orsay (FR)
(74) Mandataire: Fort, Jacques

(56) Documents cités:
- WO-A-87/01484
- COMMUTATION ET TRANSMISSION vol. 12, no. 4 , 1990 , PARIS FR pages 65 - 76 VIGARIE ET AL. 'VISIOPASS: POINTS D'EMISSION D2 MAC PAQUET'
- 5. CONFERENCE AND EXHIBITION ON TELEVISION TECHNIQUES 12-14 JUNE 1990 vol. II , BUDAPEST pages 257 - 263 KOVACS 'C-, D- AND D2-MAC/PACKET SIGNAL GENERATOR'
- IBA TECHNICAL REVIEW no. 24 , Novembre 1988 , WINCHESTER GB pages 48 - 49 'DATA BROADCASTING'

## Description

La présente invention a pour objet un procédé de constitution de multiplex numérique à transmettre ou à diffuser, ce multiplex étant constitué de paquets provenant de plusieurs sources et dont au moins certains sont obtenus, à partir de précurseurs de paquet respectifs provenant des sources, par application d'un traitement parmi ceux appartenant à un catalogue de traitements mémorisés. Le terme de "précurseur de paquet" est utilisé pour désigner les données déjà réparties en paquets, mais sous une forme qui n'est pas celle dans laquelle les paquets sont ultérieurement diffusés.

L'invention est utilisable chaque fois que des paquets numériques provenant de sources différentes sont à soumettre en temps réel à un traitement déterminé, parmi plusieurs, avant de les transmettre ou de les diffuser sous forme d'un flot continu. Toutefois, elle trouve une application importante, bien que non exclusive, dans la constitution d'un multiplex numérique du genre qu'on peut qualifier de X/Paquets, défini par la portion du document "Spécification du système D2-MAC Paquets" de septembre 1985 qui concerne la partie numérique du signal de télévision, ce multiplex pouvant être utilisé seul, par exemple en télévision numérique, ou combiné avec une partie analogique, ce qui est le cas du D2-MAC.

Dans le multiplex numérique, le flot de bits destinés à la transmission et à la diffusion du son et des données est réparti en paquets de 751 bits, ayant chacun une adresse de 23 bits permettant d'identifier l'origine du paquet et une partie utile. Suivant leur origine et/ou leur nature, les paquets subissent, avant multiplexage avec le signal analogique, des traitements différents.

Dans le cas particulier du D2-MAC/Paquet, certains traitements sont effectués sur tous les paquets : les en-têtes de paquets, contenant l'adresse, sont protégées par insertion d'un code de Golay; les paquets sont entrelacés.

D'autres traitements ne sont appliqués qu'à certains paquets, par exemple à ceux de la voie zéro. Toujours dans le cas du D2-MAC/Paquet, les paquets représentant des données sont protégés par redondance de contrôle cyclique (CRC) et par code de Golay. Enfin les paquets correspondant à un programme à accès conditionnel sont embrouillés.

Des traitements sont également à effectuer sur les paquets dans le cas d'un signal qu'on peut qualifier de X/Paquet plein temps, tel que par exemple celui obtenu par application du procédé décrit et revendiqué dans le document EP-A-0552 099.

Pour plus de simplicité, il sera cependant surtout question par la suite de la constitution du multiplex numérique destiné à être incorporé un signal D2-MAC/Paquet, mais cette application ne constitue qu'un exemple. Un procédé et un dispositif permettant de générer un multiplex constitué d'une part de paquets numériques, d'autre part d'une composante vidéo analogique, sont décrits dans l'article de Vigarie et al "Visiopass : Points d'Emission D2 MAC Paquet" dans "Commutation et Transmission", vol. 12, n° 4, 1990, Paris, pages 65-76.

Une solution avantageuse consiste à effectuer tous les traitements dans une même unité de traitement, qui reçoit, de sources de paquets, des messages qu'on qualifiera par la suite de "précurseurs de paquets" pour faire apparaître qu'il ne s'agit pas de paquets sous la forme définitive où ils seront diffusés. En effet cela rend inutile de munir chacune des sources de paquets qui doivent subir un même traitement des moyens pour l'accomplir.

L'approche qui vient à l'esprit consiste a envoyer à l'unité de traitement, à chaque arrivée d'un précurseur de paquet destiné à donner naissance à un paquet à diffuser, une instruction identifiant le paquet et le traitement à lui appliquer. Cela implique d'assurer la cohérence temporelle des modifications au niveau des sources et au niveau de l'unité de traitement.

L'invention vise à fournir un procédé de constitution de multiplex numérique du genre ci-dessus défini permettant de simplifier le traitement et d'améliorer sa sécurité. Il faut bien relever qu'il ne s'agit pas d'intervenir sur un protocole de transmission.

L'invention propose notamment dans ce but un procédé suivant la revendication 1.

L'invention propose également un codeur permettant de mettre en oeuvre le procédé ci-dessus défini, suivant la revendication 3.

Le champ d'identification peut notamment comprendre des bits indiquant :
- si le paquet doit être protégé par redondance de contrôle cyclique (CRC), ce qui exige un bit,
- si la partie données doit être protégée par un code de Golay (ou un autre code de protection par blocs), ce qui exige un bit,
- si les données sont à embrouiller,
- dans le cas d'embrouillage, quel mode d'embrouillage ou quel numéro d'ordre d'embrouilleur est à utiliser,
- dans le cas où plusieurs unités de traitement sont prévues, laquelle doit être utilisée.

Les fonctions à remplir peuvent être assurées dans un codeur par un appareil programmé, un appareil câblé et même un circuit intégré à application spécifique (ASIC). Un ASIC peut aisément incorporer plusieurs embrouilleurs et peut être prévu pour un montage de plusieurs ASIC en parallèle. Cette dernière possibilité est particulièrement intéressante lorsque le codeur est destiné à traiter un signal X-paquets plein temps, utilisable pour la télévision numérique.

L'invention sera mieux comprise à la lecture de la description qui suit d'un mode particulier de réalisation, donné à titre d'exemple non limitatif. La description se réfère aux dessins qui l'accompagnent, dans lesquels :
- la figure 1 est un schéma de principe, montrant l'association entre des sources de paquets et une unité de traitement; et
- la figure 2 est un synoptique d'une constitution possible d'unité de traitement utilisable dans le montage de la figure 1.

Seule sera maintenant décrite la constitution générale des composants concernés par l'invention d'un codeur D2-MAC/Paquet, le reste du codeur pouvant avoir une constitution classique et par exemple celle décrite dans la demande de brevet français n° FR 86 03831 (publication FR-A-2 596 228). La disposition décrite est directement transposable au cas de la génération d'un signal quelconque X/Paquet.

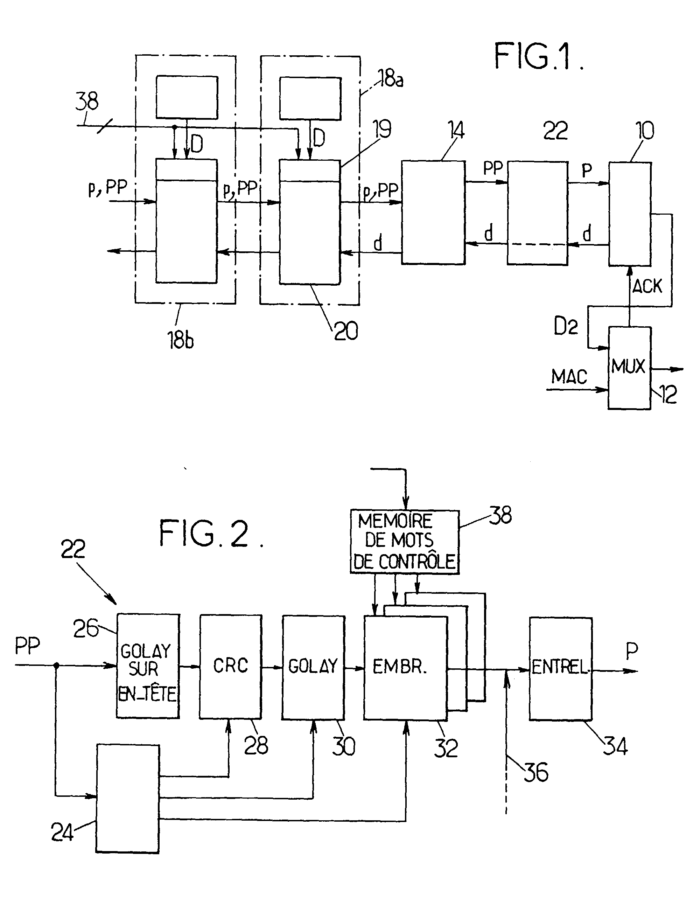

L'ensemble montré à titre d'exemple en figure 1 a une constitution générale similaire à celle décrite dans la demande de brevet EP 92 401 652 publication EP-A-0 519 796, publiée le 23.12.92, à laquelle on pourra se reporter. Il est prévu pour fournir, à l'organe 10 d'entrée d'un canal de sortie, des paquets destinés à constituer la partie numérique, codée en duo-binaire, d'un multiplex temporel en bande de base formé par un multiplexeur 12. Pour cela l'organe d'entrée 10 est prévu, de façon classique, pour envoyer les demandes d de paquets, en fonction des disponibilités, et répartir les paquets P qu'il reçoit en salves.

Toutes les sources de paquets peuvent avoir la même constitution, mais être par exemple destinées à fournir des paquets d'origine différente (correspondant à des programmes différents) ou des paquets de priorités diverses. Chaque source, 18a par exemple, comporte un circuit 19 qu'on peut considérer comme un circuit de mise en forme de données en "précurseurs de paquets" PP et un circuit d'aiguillage 20. Les circuits d'aiguillage 20 des diverses sources 18 permettent d'émettre vers l'aval, avec son champ d'identification, celui des précurseurs de paquets PP qui a la priorité p la plus élevée, sur une instruction provenant d'un sélecteur de multiplexage de paquets 14. La priorité p et le paquet PP passent successivement sur la même voie.

Entre le sélecteur 14 et l'organe d'entrée 10 est interposée une unité de traitement 22 dont la fonction est, d'effectuer sur chaque précurseur de paquet un traitement approprié pour donner naissance à un paquet de format et de longueur déterminés (paquets de 751 bits dans le cas du D-MAC et du D2-MAC/Paquets). Chaque précurseur de paquets PP peut alors être formé en ajoutant, à un groupe de données D muni d'un en-tête non-codé destiné à donner naissance à l'en-tête de paquets, un champ (préfixe ou suffixe) de taille suffisante pour identifier tous les traitements prévus et leurs combinaisons éventuelles (par exemple embrouillage après codage de protection contre les erreurs). Aucune protection contre les erreurs n'est nécessaire au cours des transferts à l'intérieur du codeur, du fait que ces transferts ne sont pas soumis aux perturbations provoquées par un canal de transmission.

L'unité de traitement 22 comporte plusieurs opérateurs correspondant chacun à un traitement et identifiés par un mot d'un ou plusieurs bits prévu dans le champ d'identification.

Une constitution possible de l'unité 22 est montrée en figure 2. Sur cette figure les éléments de nature classique, tels que la base de temps et les moyens de repérage des débuts de précurseurs de paquet, sont omis.

L'unité 22 a deux branches, dont l'une contient les opérateurs et l'autre comporte un détecteur d'options 24 et décode le champ d'identification de chaque précurseur de paquets PP et fournit un signal d'activation sur une ou plusieurs sorties vers des opérateurs montés en cascade (ou éventuellement en parallèle en cas de traitements qui ne sont pas cumulables et portent sur des paquets différents), en fonction du contenu du champ reçu.

Les opérateurs peuvent comporter :
- un opérateur 26 d'application d'un code de Golay aux en-têtes de paquets,
- un opérateur 28 d'adjonction d'un suffixe de paquet, assurant une protection des paquets par redondance de contrôle cyclique,
- un opérateur de Golay de protection des données,
- un ou plusieurs opérateurs d'embrouillage 32, la sortie du détecteur 24 vers les embrouilleurs permettant d'assurer une sélection entre eux, par exemple par indication d'un numéro d'embrouilleur, et
- un opérateur d'entrelacement 34.

Certains des traitements peuvent être effectués de façon systématique, sur tous les paquets. Dans ce cas il n'est pas nécessaire de prévoir une sortie du détecteur 24 vers les opérateurs correspondants. Dans le cas de la figure 2, c'est le cas des opérateurs 26 et 34.

Pour permettre la sélection des opérateurs, le champ d'identification présent dans chaque précurseur de paquets peut comporter :
- un bit indiquant s'il doit y avoir protection par CRC,
- un bit indiquant s'il doit y avoir protection de Golay sur les données (l'en-tête étant toujours protégé),
- un bit indiquant si le paquet doit être embrouillé et quatre bits supplémentaires indiquant alors le numéro de l'embrouilleur à utiliser,
- dans le cas où plusieurs unités de traitement sont montées en parallèle et attaquent l'entrelaceur 34 (comme indiqué par une liaison 36, généralement à trois états), quatre bits indiquant le numéro d'ordre de l'unité de traitement à utiliser.

Les mots de contrôle à utiliser par les embrouilleurs peuvent être préchargés dans une mémoire 38, reliée à un générateur de mots de contrôle (non représenté) associé à un système d'accès conditionnel d'un type quelconque.

Le détecteur 24 peut n'être prévu pour envoyer des instructions vers les opérateurs que lorsque le traitement à faire subir change. Dans ce cas les opérateurs sont prévus pour répéter le même traitement, sur les paquets successifs, jusqu'à réception d'un ordre identifiant un nouveau traitement. Dans une variante de réalisation, les instructions définissant le traitement à effectuer sont émises par le détecteur d'option 24 à l'arrivée de chaque paquet.

Il est possible d'envoyer, par exemple sur une ligne 38, des ordres de changement de priorité aux sources de paquets. Le changement s'effectue sans aucun problème de synchronisation entre commande des sources et commande de sélecteur.

De nombreuses constitutions autres que celle qui vient d'être décrite sont possibles et les traitements appliqués peuvent être de natures très diverses. Dans tous les cas la constitution globale du système est très simple, puisque les sources n'ont qu'à mémoriser et insérer des mots d'identification et puisque l'unité de traitement reçoit, en total synchronisme avec chaque précurseur de paquet, l'indication du traitement à effectuer.

## Revendications

1. Procédé de constitution de multiplex numérique à transmettre ou diffuser, ledit multiplex étant constitué de paquets constitués à partir de précurseurs de paquets contenant les données à insérer dans les paquets sous une forme non définitive et provenant de plusieurs sources (18a, 18b), par application d'un traitement parmi ceux qui appartiennent à un catalogue de traitements mémorisés,
caractérisé en ce qu'on ajoute à chaque précurseur de paquet, dans la source respective (18a, 18b), un champ d'identification du traitement à effectuer sur le précurseur de paquet pour constituer un paquet et en ce qu'on applique, dans une unité de traitement (22) mémorisant les différents traitements possibles à effectuer, celui des traitements qui est défini par le contenu du champ d'identification dudit précurseur de paquet pour constituer un paquet constituant ledit multiplex.

2. Procédé selon la revendication 1, caractérisé en ce que le champ d'identification comprend des bits indiquant si au moins un traitement parmi les suivants est ou non à appliquer :
- protection des données de paquet par code de Golay,
- embrouillage et
- protection par suffixe de redondance de contrôle cyclique.

3. Codeur contenant des souces (18a, 18b) et destiné à constituer un multiplex numérique à transmettre ou diffuser, ce multiplex étant constitué de paquets de longueur déterminée provenant de plusieurs sources et dont au moins certains sont obtenus, à partir de précurseurs de paquets respectifs provenant des sources et contenant les données à insérer dans les paquets respectifs sous une forme non définitive, par application d'un traitement parmi ceux appartenant à un catalogue de traitements, caractérisé en ce que les sources (18a,18b) comportent des moyens permettant d'introduire, dans un champ prévu à cet effet dans chaque précurseur de paquet, l'identification du traitement à effectuer et en ce que le codeur comprend, en aval des sources (18a, 18b), une unité de traitement (22) qui comporte des moyens (24) permettant de décoder le champ desdits précurseurs de paquets, de provoquer le traitement desdits précurseurs de paquets défini par le dit champ afin de constituer les paquets dans leur forme définitive.

4. Codeur selon la revendication 3, caractérise en ce que toutes les sources ont la même constitution.

5. Codeur selon la revendication 3 ou 4, caractérisé en ce que l'unité de traitement (22) comporte des opérateurs en cascade dont certains au moins permettent d'effectuer des traitements optionnels et qui sont commandés par les moyens (24) de décodage, les autres opérateurs éventuels effectuant des traitements systématiques sur tous les paquets.

6. Codeur selon la revendication 5, caractérisé en ce que lesdits opérateurs en cascade sont prévus pour effectuer au moins certains des traitements mémorisés suivants :
- protection par redondance de contrôle cyclique,
- protection par un code de Golay,
- embrouillage des données.

7. Codeur selon la revendication 5 ou 6, caractérisé en ce que lesdits opérateurs en cascade sont prévus pour effectuer le même traitement sur tous les paquets reçus jusqu'à réception d'un ordre de modification provenant des moyens de décodage.

## Patentansprüche

1. Verfahren zur Bildung eines digitalen Multiplex zur Übertragung oder Verbreitung, wobei der Multiplex Pakete umfaßt, die auf der Grundlage von Paketvorspannteilen, welche die Daten enthalten, die in die Pakete in einer nicht-definitiven Form einzufügen sind und die von verschiedenen Quellen (18a,18b) stammen, durch Anwendung einer Behandlung auf diejenigen gebildet sind, welche zu einem Katalog von gespeicherten Behandlungen gehören,
**dadurch gekennzeichnet, daß** zu jedem Paketvorspannteil in der jeweiligen Quelle (18a,18b) ein Identifizierungsfeld der Behandlung, die auf jeden Paketvorspannteil zum Bilden eines Paketes auszuführen ist, hinzufügt wird, und daß in einer Behandlungseinheit (22), die die verschiedenen möglichen durchzuführenden Behandlungen speichert, diejenige der Behandlungen angewendet wird, die durch den Inhalt des Identifizierungsfeldes des Paketvorspannteils definiert wird, um ein Paket zu bilden, das den Multiplex bildet.

2. Verfahren nach Anspruch 1,
**dadurch gekennzeichnet, daß** das Identifizierungsfeld Bits umfaßt, welche anzeigen, ob mindestens eine der folgenden Behandlungen anzuwenden ist oder nicht:
- Schutz der Daten des Paketes durch einen Golay-Kode,
- Verschlüsselung und
- Schutz durch ein Suffix der zyklischen Redundanzsteuerung.

3. Kodierer, der Quellen (18a,18b) umfaßt und vorgesehen ist zum Bilden eines digitalen Multiplex zur Übertragung oder Verbreitung, wobei dieser Multiplex durch Pakete mit einer vorbestimmten Länge gebildet wird, welche von mehreren Quellen stammen und von denen mindestens bestimmte auf der Grundlage von jeweiligen Paketvorspannteilen erhalten werden, welche von den Quellen stammen und die Daten enthalten, die in die jeweiligen Pakete unter einer nicht-definitiven Form durch Anwenden einer Behandlung auf diejenigen einzufügen sind, die zu einem Behandlungskatalog gehören,
**dadurch gekennzeichnet, daß** die Quellen (18a,18b) Mittel umfassen, welche die Einführung in einem zu diesem Zweck in jedem Paketvorspannteil vorgesehenen Feld der Identifikation der auszuführenden Behandlung erlaubt, und daß der Kodierer stromabwärts von den Quellen (18a,18b) eine Behandlungseinheit (22) umfaßt, die Mittel (24) enthält, welche die Dekodierung des Feldes der Paketvorspannteile zur Auslösung der Behandlung der Paketvorspannteile, wie sie durch das Feld definiert wird, erlaubt, um die Pakete in ihrer definitiven Form zu bilden.

4. Kodierer nach Anspruch 3,
**dadurch gekennzeichnet, daß** alle Quellen die gleiche Konstitution haben.

5. Kodierer nach Anspruch 3 oder 4,
**dadurch gekennzeichnet, daß** die Behandlungseinheit (22) Operatoren in Kaskadenanordnung umfaßt, von denen mindestens einige die Ausführung von optionellen Behandlungen erlauben und die durch die Dekodierungsmittel (24) gesteuert sind, wobei die anderen eventuellen Operatoren systematische Behandlungen auf allen diesen Paketen durchführen.

6. Kodierer nach Anspruch 5,
**dadurch gekennzeichnet, daß** die Operatoren in Kaskadenanordnung vorgesehen sind, um mindestens einige der folgenden gespeicherten Behandlungen durchzuführen:
- Schutz durch zyklische Redundanzsteuerung,
- Schutz durch einen Golay-Kode,
- Verschlüsselung der Daten.

7. Kodierer nach Anspruch 5 oder 6
**dadurch gekennzeichnet, daß** die Operatoren in Kaskadenanordnung vorgesehen sind, um die gleiche Behandlung auf allen empfangenen Paketen bis zum Empfang eines Modifizierungsbefehles auszuführen, der von dem Dekodiermittel stammt.

## Claims

1. A method for forming a digital multiplex signal to be transmitted or broadcast, said multiplex consisting of packets formed from packet precursors including the data to be inserted into the packets in provisional form and originating from a plurality of sources (18a,18b), by applying a process among processes belonging to a catalog of stored processes, characterized by the step of adding to each packet precursor, in the respective source (18a,18b) a field identifying the process to be applied on the packet precursor for obtaining a packet and by the step of applying, in a processing unit (22) storing the different possible processes to be carried out, that process which is defined by the content of the identification field of said packet precursor for constituting a packet of said multiplex.

2. Method according to claim 1, characterized in that the identification field includes bits indicating whether at least one of the following processes is to be applied or not:
- protection of the data in the packet by a Golay code,
- scrambling, and
- protection of the data by cyclic redundancy control.

3. Encoder containing sources (18a,18b) and arranged for forming a digital multiplex signal to be transmitted or broadcast, said multiplex consisting of packets of predetermined length originating from a plurality of sources and some at least of which are obtained, from respective packet precursors originating from the sources and containing the data to be inserted in a provisional form, by applying a process among processes which belong to a catalog of processes, characterized in that the sources (18a,18b) comprise means for introducing, in a field provided for that purpose in each packet precursor, an identification of a process to be carried out and in that the encoder comprises, downstream of the sources (18a,18b), a processing unit (22) which comprises means (24) enabling to decode the field of said packet precursors, for causing processing of said packet precursors as defined by said field for constituting the packets in their final form.

4. Encoder according to claim 3, characterized in that all sources have the same structure.

5. Encoder according to claim 3 or 4, characterized in that the processing unit (22) comprises cascaded operators, at least some of said operators enabling optional treatments to be performed and said operators being controlled by the decoding means (24), the possible additional operators carrying out systematic treatments on all of the packets.

6. Encoder according to claim 5, characterized in that said cascaded operators are arranged for carrying at least some of the following stored treatments:
- protection by cyclic redundancy check,
- protection by a Golay code
- data scrambling.

7. Encoder according to claim 5 or 6, characterized in that said cascaded operators are arranged for carrying out the same treatment on all received packets until they receive a modification order originating from the decoding means.
